# EUROPÄISCHE PATENTSCHRIFT

(11) **EP 1 119 703 B1**
(45) Veröffentlichungstag und Bekanntmachung des Hinweises auf die Patenterteilung: **23.03.2005**
(21) Anmeldenummer: 00963873.5
(22) Anmeldetag: 03.08.2000
(51) Int. Cl.: F02M 51/06, F02M 61/18

(54) **BRENNSTOFFEINSPRITZVENTIL**
FUEL INJECTION VALVE
SOUPAPE D'INJECTION DE CARBURANT

(30) Priorität: 05.08.1999 DE 19936942
(43) Veröffentlichungstag der Anmeldung: 01.08.2001
(73) Patentinhaber: ROBERT BOSCH GMBH, 70442 Stuttgart (DE)
(72) Erfinder: STIER, Hubert, 71679 Asperg (DE)
(86) Internationale Anmeldenummer: PCT/DE2000/002618
(87) Internationale Veröffentlichungsnummer: WO 2001/011223

(56) Entgegenhaltungen:
- DE-A- 2 841 967
- DE-A- 4 005 455
- US-A- 4 200 237

## Beschreibung

### Stand der Technik

Die Erfindung geht aus von einem Brennstoffeinspritzventil nach der Gattung des Hauptanspruchs.

Aus der DE 40 05 455 A1 ist ein Brennstoffeinspritzventil nach der Gattung des Anspruchs 1 bekannt. Das aus dieser Druckschrift hervorgehende Brennstoffeinspritzventil weist einen piezoelektrischen Aktor und einen mittels einer Ventilnadel betätigbaren Ventilschließkörper, der mit einer Ventilsitzfläche zu einem Dichtsitz zusammenwirkt, auf. Der Ventilschließkörper liegt an einer ringförmigen Dichtstelle an der Ventilsitzfläche an, wodurch eine Abspritzöffnung abgedichtet ist. Bei Betätigung des Aktors hebt sich der Ventilschließkörper von der Ventilsitzfläche ab, wodurch der Dichtsitz geöffnet wird und Brennstoff aus dem Brennstoffeinspritzventil abgespritzt wird. Der Brennstoffstrom des abgespritzten Brennstoffs ist dabei rotationssymmetrisch zu einer Ventilachse. Der Brennstoff wird daher in einem rotationssymmetrischen Sprühkegel abgespritzt.

Nachteilig bei dem aus der DE 40 05 455 A1 bekannten Brennstoffeinspritzventil ist, daß sich eine richtungsabhängige Verteilung des abgespritzen Brennstoffes nicht vorgeben läßt. Dadurch läßt sich mit dem bekannten Brennstoffeinspritzventil keine gesteuerte inhomogene Brennstoffverteilung im Brennraum einer Brennkraftmaschine erreichen.

Aus der DE 44 34 892 A1 ist ein Brennstoffeinspritzventil bekannt, das zwei bezüglich einer Ventilachse auf unterschiedlicher Höhe liegende Abspritzöffnungen aufweist. Dadurch wird der Brennstoff in zwei Abspritzrichtungen abgespritzt, die unterschiedliche Winkel mit der Ventilachse einschließen.

Nachteilig bei dem aus der DE 44 34 892 A1 bekannten Brennstoffeinspritzventil ist, daß die beiden Abspritzrichtungen konstruktiv fest vorgegeben sind. Außerdem ist das Verhältnis der durch die beiden Abspritzöffnungen tretenden Brennstoffströme konstruktiv vorgegeben und kann insbesondere während des Betriebes des Brennstoffeinspritzventils nicht gesteuert werden.

Aus der DE 28 41 967 A1 ist bereits ein Brennstoffeinspritzventil für Brennstoffeinspritzanlagen von Brennkraftmaschinen bekannt, wobei dieses Brennstoffeinspritzventil als Düse zum Einspritzen von Diesel-Kraftstoff ausgeführt ist und insofern die Ventilnadel hydraulisch betätigt wird. Die Ventilnadel weist einen Nadelkegel als Ventilschließabschnitt auf, der mit einer Ventilsitzfläche zu einem Dichtsitz zusammenwirkt. Stromabwärts des Dichtsitzes sind mehrere Abspritzöffnungen vorgesehen. Die Ventilnadel besitzt an ihrem stromabwärtigen Ende einen Nadelzapfen, der in einen Stauraum hineinragt, von dem aus die Abspritzöffnungen heraus verlaufen. Der Nadelzapfen der Ventilnadel weist eine Abschrägung auf, die es ermöglicht, dass hubabhängig unterschiedliche Abspritzöffnungen freigegeben werden, wobei in einem ersten Teilhub eine der Abspritzöffnungen beispielsweise vollständig verschlossen bleibt und erst nach einem zweiten Teilhub freigegeben wird, während eine andere Abspritzöffnung unmittelbar nach Abheben des Ventilschließabschnitts von der Ventilsitzfläche mit Brennstoff versorgt wird. Bei diesem bekannten Brennstoffeinspritzventil ist die Ventilsitzfläche vollständig umlaufend gleichmäßig, kegelstumpfförmig ausgeführt.

### Vorteile der Erfindung

Das erfindungsgemäße Brennstoffeinspritzventil mit den kennzeichnenden Merkmalen des Hauptanspruchs hat demgegenüber den Vorteil, daß sich die Brennstoffströme von in unterschiedlichen Abspritzrichtungen abgegebenen Brennstoffstrahlen und deren Verhältnis steuern lassen.

Durch die in den Unteransprüchen aufgeführten Maßnahmen sind vorteilhafte Weiterbildungen des im Hauptanspruch angegebenen Brennstoffeinspritzventils möglich.

Vorteilhaft ist es, wenn die zum Drosseln des Brennstoffstroms an der Ventilsitzfläche und/oder dem Ventilschließkörper umfänglich versetzt angeordneten Teilbereiche unmittelbar an der Abspritzöffnung vorgesehen sind. Dadurch ist eine besonders effektive Drosselung gegeben.

Vorteilhaft ist es ferner, wenn ein Teilbereich eine an der Ventilsitzfläche und/oder dem Ventilschließkörper ausgebildete Erhöhung aufweist. Beim Öffnen des Dichtsitzes mit einem ersten Ventilnadelhub der Ventilnadel ist dadurch der Brennstoffstrom in dem durch die Erhöhung gedrosselten Brennstoffstrahl gegenüber dem ungedrosselten Brennstoffstrahl stark gedrosselt. Beim Öffnen des Dichtsitzes mit einem zweiten, größeren Ventilnadelhub der Ventilnadel verringert sich die von der Erhöhung erzeugte Drosselwirkung, wodurch sich der Brennstoffstrom des gedrosselten Brennstoffstrahls dem Brennstoffstrom des ungedrosselten Brennstoffstrahls angleicht.

Vorteilhaft ist es auch, wenn der Ventilschließkörper zur Ausbildung eines Zwischenraumes stumpfer als die Ventilsitzfläche zuläuft, so daß sich der Zwischenraum mit Ausnahme der drosselnden Teilbereiche im wesentlichen radial verbreitet. Dadurch wird bei einem kleinen Ventilnadelhub der Ventilnadel ein größerer Brennstoffstrom erreicht, wodurch sich der Unterschied zwischen den gedrosselten und den ungedrosselten Brennstoffstrahlen vergrößert.

Ferner ist es vorteilhaft, wenn bei geschlossenem Brennstoffeinspritzventil der Ventilschließkörper an einer Dichtstelle an dem Ventilsitz anliegt, die bezüglich einer Strömungsrichtung entweder nach oder vor den drosselnden Teilbereichen ausgebildet ist, wobei es besonders vorteilhaft ist, wenn die Dichtfläche im wesentlichen in einer senkrecht zu einer Ventilachse orientierten Ebene liegt. Dadurch erfolgt die Abdichtung nicht an den drosselnden Teilbereichen; insbesondere liegt bei geschlossenem Brennstoffeinspritzventil in den Teilbereichen der Ventilschließkörper nicht an der Ventilsitzfläche an, wodurch ein sicheres Schließen des Ventils gewährleistet ist. Außerdem ist die Dichtfläche auf diese Weise einfach zu realisieren.

### Zeichnung

Ausführungsbeispiele der Erfindung sind in der Zeichnung vereinfacht dargestellt und in der nachfolgenden Beschreibung näher erläutert. Es zeigen:
- Fig. 1: einen axialen Schnitt durch ein Ausführungsbeispiel eines erfindungsgemäßen Brennstoffeinspritzventils;
- Fig. 2: das in Fig. 1 mit II bezeichnete Detail in geschlossenem Zustand des Brennstoffeinspritzventils;
- Fig. 3: das in Fig. 1 mit II bezeichnete Detail bei einem ersten Ventilnadelhub der Ventilnadel;
- Fig. 4: das in Fig. 1 mit II bezeichnete Detail bei einem zweiten größeren Ventilnadelhub der Ventilnadel;
- Fig. 5: das in Fig. 1 mit II bezeichnete Detail in einer alternativen Ausführungsform;
- Fig. 6: ein Detail eines erfindungsgemäßen Brennstoffeinspritzventils entsprechend einem weiteren Ausführungsbeispiel;
- Fig. 7: ein Detail eines erfindungsgemäßen Brennstoffeinspritzventils entsprechend einem weiteren Ausführungsbeispiel; und
- Fig. 8: ein Anwendungsbeispiel des erfindungsgemäßen Brennstoffeinspritzventils.

### Beschreibung der Ausführungsbeispiele

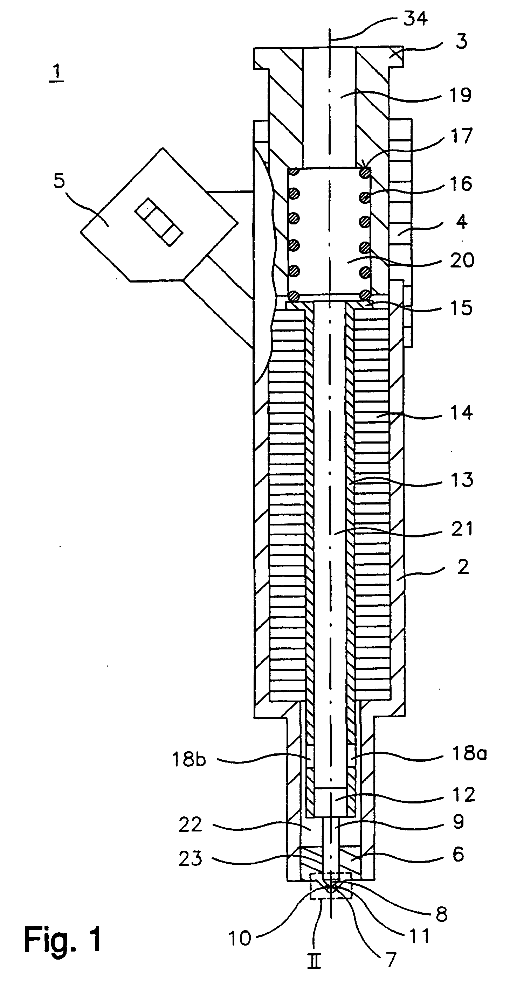

Fig. 1 zeigt in einer auszugsweisen axialen Schnittdarstellung ein erfindungsgemäßes Brennstoffeinspritzventil 1. Das Brennstoffeinspritzventil 1 dient insbesondere zum direkten Einspritzen von Brennstoff, insbesondere von Benzin, in einen Brennraum einer gemischverdichtenden, fremdgezündeten Brennkraftmaschine als sogenanntes Benzindirekteinspritzventil. Das erfindungsgemäße Brennstoffeinspritzventil 1 eignet sich jedoch auch für andere Anwendungsfälle.

Das Brennstoffeinspritzventil 1 weist ein Ventilgehäuse 2 auf, das mit einem Brennstoffeinlaßstutzen 3 verbunden ist, wobei das Ventilgehäuse 2 und der Brennstoffeinlaßtstutzen 3 abschnittsweise von einem Kunststoffelement 4 umgeben sind. An dem Kunststoffelement 4 ist ein elektrischer Anschluß 5 ausgebildet, über den ein elektrisches Zuleitungskabel mit dem Brennstoffeinspritzventil 1 verbunden werden kann. An dem Ventilgehäuse 2 ist ein Ventilsitzkörper 6 befestigt, der eine Ventilsitzfläche 7 aufweist, die mit einem Ventilschließkörper 8 zu einem Dichtsitz zusammenwirkt. Der Ventilschließkörper 8 ist kegelstumpfförmig sich in Abspritzrichtung verjüngend ausgebildet. Bei dieser Ausgestaltung ist das Brennstoffeinspritzventil 1 als innenöffnendes Brennstoffeinspritzventil 1 ausgeführt. Die Betätigung des Ventilschließkörpers 8 erfolgt mit einer Ventilnadel 9, die in dem dargestellten Ausführungsbeispiel einteilig mit dem Ventilschließkörper 8 ausgebildet ist. Der Ventilsitzkörper 6 weist Abspritzöffnungen 10, 11 auf, durch die der Brennstoff von dem Brennstoffeinspritzventil 1 abgespritzt wird.

Die Ventilnadel 9 weist einen zylinderförmigen Abschnitt 12 auf, der mit einer rohrförmigen Hülse 13 verbunden ist. Die Hülse 13 ist abschnittsweise von einem piezoelektrischen oder magnetostriktiven Aktor 14 umschlossen, wobei ein Bund 15 der Hülse 13 den Aktor 14 hintergreift. Der Aktor 14 stützt sich einerseits am Ventilgehäuse 2 und andererseits am Bund 15 der Hülse 13 ab. Mit einer Druckfeder 16, die auf den Bund 15 der Hülse 13 einwirkt, wird der Aktor 14 mit einer Vorspannung beaufschlagt. Die Druckfeder 16 stützt sich dabei an einer Anlagefläche 17 ab, die an dem Brennstoffeinlaßstutzen 3 ausgebildet ist. Um den Durchfluß von Brennstoff zu ermöglichen, weist die Hülse 13 Aussparungen 18a, 18b auf.

Zur Betätigung des Brennstoffeinspritzventils 1 wird der Aktor 14 mit einem elektrischen Steuersignal beaufschlagt, wodurch sich dieser entgegen der Kraft der Druckfeder 16 ausdehnt und die Hülse 13 in Richtung auf den Brennstoffeinlaßstutzen 3 bewegt. Dadurch wird der Ventilschließkörper 8 der Ventilnadel 9 von der Ventilsitzfläche 7 des Ventilsitzkörpers 6 abgehoben, wodurch der aus dem Ventilschließkörper 8 und der Ventilsitzfläche 7 gebildete Dichtsitz geöffnet wird. Durch den entstandenen Spalt zwischen Ventilschließkörper 8 und der Ventilsitzfläche 7 gelangt Brennstoff in die Abspritzöffnungen 10, 11, wodurch Brennstoff aus dem Brennstoffeinspritzventil 1 abgespritzt wird. Die Zufuhr von Brennstoff erfolgt dabei vom Brennstoffeinlaßstutzen 3, durch eine innere Aussparung 19 im Brennstoffeinlaßstutzen 3, einen Druckfederraum 20, eine innere Aussparung 21 der rohrförmigen Hülse 13 und die Aussparungen 18a, 18b in einen Brennstoffraum 22. Über einen zwischen der Ventilnadel 9 und dem Ventilsitzkörper 6 ausgebildeten Zwischenraum 23 erfolgt die Zufuhr von Brennstoff aus dem Brennstoffraum 22 zu dem aus dem Ventilschließkörper 8 und der Ventilsitzfläche 7 gebildeten Dichtsitz. Der Zwischenraum 23 kann z. B. durch an der Ventilnadel 9 oder dem Ventilsitzträger 6 ausgebildete Nuten gegeben sein.

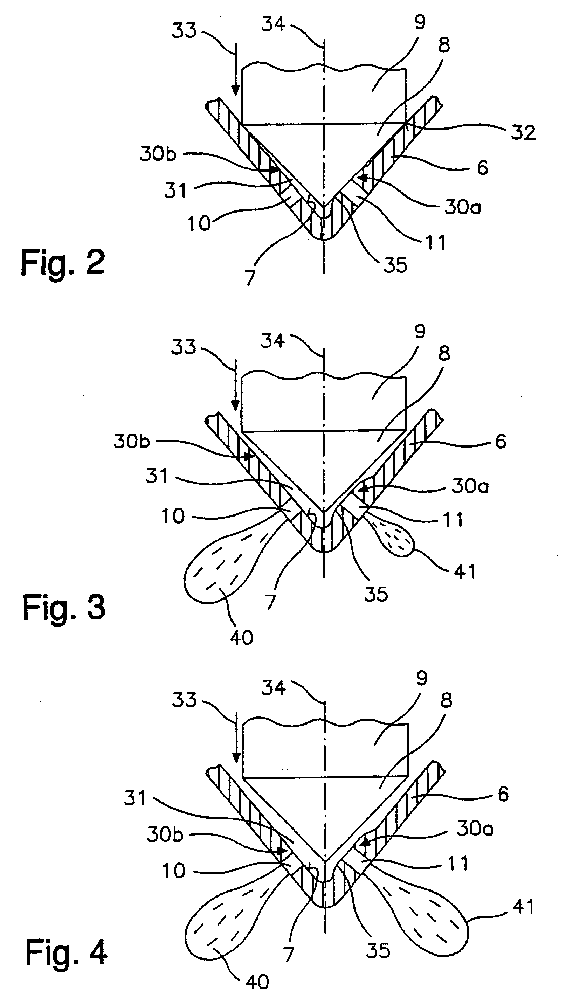

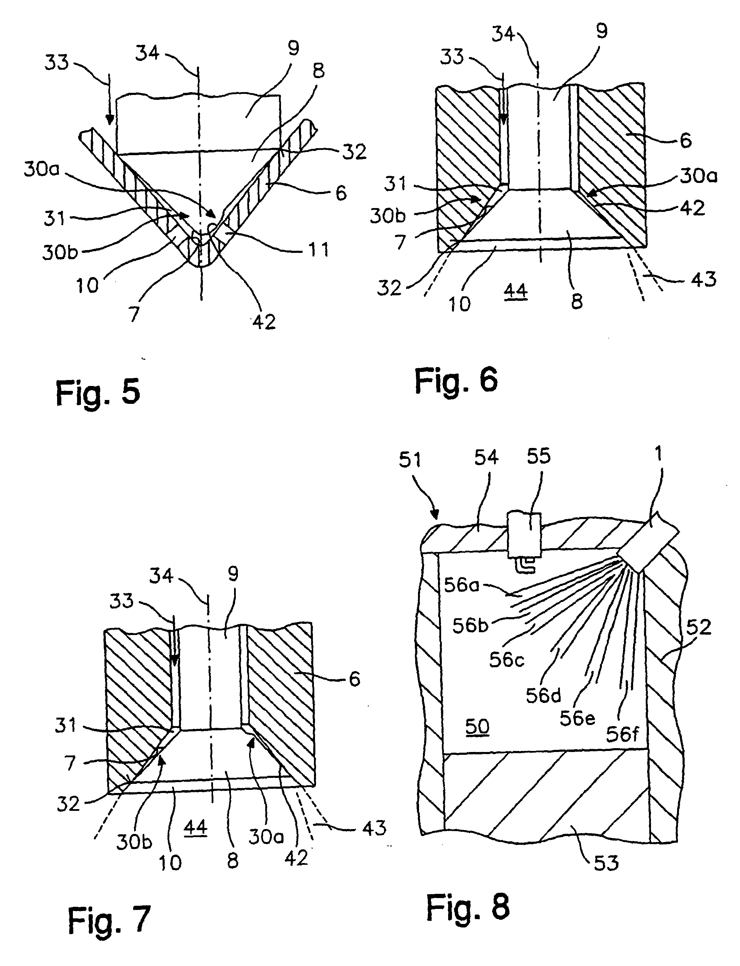

Die Ventilsitzfläche 7 und/oder der Ventilschließkörper 8 weisen umfänglich versetzt angeordnete Teilbereiche auf, die einen Brennstoffstrom abhängig von einem Ventilnadelhub der Ventilnadel 9 unterschiedlich drosseln. Dies ist im Detail in den Figuren 2 bis 7 zu erkennen. Die Figuren 2 bis 5 zeigen dabei verschiedene Ausführungsformen des in Fig. 1 mit II bezeichneten Ausschnitts und die Fig. 6 und 7 zeigen weitere Ausführungsformen für ein außenöffnendes Brennstoffeinspritzventil. Bereits beschriebene Elemente sind mit übereinstimmenden Bezugszeichen versehen, so daß sich eine wiederholende Beschreibung erübrigt.

In dem in Fig. 2 dargestellten Ausführungsbeispiel weist der Ventilsitzkörper 6 verschiedene Teilbereiche 30a und 30b auf. Dabei läuft der Ventilschließkörper 8 zur Ausbildung eines Zwischenraums 31 stumpfer als die Ventilsitzfläche 7 zu, so daß sich der Zwischenraum 31 mit Ausnahme des Teilbereichs 30a zur Ventilachse 34 hin radial vergrößert. Um ein sicheres Schließen des Brennstoffeinspritzventils 1 zu gewährleisten, liegen die Teilbereiche 30a, 30b nicht an dem Ventilschließkörper 8 an. Der Ventilschließkörper 8 liegt an einer kreisförmigen Dichtstelle 32 an der Ventilsitzfläche 7 des Ventilsitzkörpers 6 an, die bezüglich einer Strömungsrichtung 33 stromaufwärts der Teilbereiche 30a, 30b ausgebildet ist. Dabei liegt die Dichtstelle 32 im wesentlichen in einer senkrecht zur Ventilachse 34 orientierten Ebene. Der Teilbereich 30a weist eine an der Ventilsitzfläche 7 ausgebildete Erhöhung 35 auf. Die Erhöhung 35 bzw. der Teilbereich 30a ist dabei unmittelbar an der Abspritzöffnung 11 vorgesehen.

In Fig. 3 ist der Ventilschließkörper 8 der Ventilnadel 9 mit einem ersten Ventilnadelhub der Ventilnadel 9 betätigt. Dadurch gelangt Brennstoff in den Zwischenraum 31, aus welchem dieser durch die Abspritzöffnung 10 abgespritzt wird. Durch den durch die Abspritzöffnung 10 fließenden Brennstoffstrom wird ein erster Brennstoffstrahl 40 erzeugt. Außerdem gelangt Brennstoff in die Abspritzöffnung 11, wodurch ein durch die Abspritzöffnung 11 fließender Brennstoffstrom erzeugt wird, der einen zweiten Brennstoffstrahl 41 erzeugt. Durch die Erhöhung 35 im Teilbereich 30a ist der Brennstoffstrom durch die Abspritzöffnung 11 stärker gedrosselt als der Brennstoffstrom durch die Abspritzöffnung 10, wodurch der Brennstoffstrahl 41 deutlich kleiner als der Brennstoffstrahl 40 ausgebildet ist. Über die Abspritzöffnung 10 wird daher mehr Brennstoff abgespritzt als über die Abspritzöffnung 11.

In Fig. 4 ist der Ventilschließkörper 8 mit einem zweiten Ventilnadelhub der Ventilnadel 9 betätigt, der größer als der erste Ventilnadelhub ist. Der Ventilschließkörper 8 hebt sich dadurch auch im Teilbereich 30a deutlich von der Ventilsitzfläche 7 ab, wodurch die Drosselwirkung der Erhöhung 35 verringert ist. Der Brennstoffstrom durch die Abspritzöffnung 11 ist daher mit dem Brennstoffstrom durch die Abspritzöffnung 10 vergleichbar, wodurch zwei vergleichbare Brennstoffstrahlen 40, 41 ausgebildet sind. Es kommt daher zu einer bezüglich der Ventilachse 34 im wesentlichen symmetrischen Abspritzung von Brennstoff aus dem Brennstoffeinspritzventil 1.

Da mit dem piezoelektrischen oder magnetostriktiven Aktor 14 ein variabler Ventilnadelhub der Ventilnadel 9 eingestellt werden kann, lassen sich auch beliebige Zwischenstellungen der in den Fig. 2, 3 und 4 dargestellten Anwendungsfälle erreichen. Daher kann über eine Variation der Brennstoffstrahlen 40, 41 die Brennstoffmengenverteilung des Brennstoffeinspritzventils 1 während des Betriebs gezielt variiert werden.

In Fig. 5 ist eine weitere Ausführungsform des erfindungsgemäßen Brennstoffeinspritzventils 1 dargestellt. In diesem Ausführungsbeispiel weist der Ventilschließkörper 8 einen Teilbereich 30a mit einer Erhöhung 42 auf. Die Ventilsitzfläche 7 des Ventilsitzkörpers 6 ist im wesentlichen konisch ausgebildet. In dem Teilbereich 30a ist die Abspritzöffnung 11 gedrosselt, wobei eine abhängig von einem Ventilnadelhub der Ventilnadel 9 variable Drosselung erreicht wird. Dadurch sind die Abspritzöffnungen 10, 11 unterschiedlich gedrosselt, wodurch eine wie bei den Fig. 2 bis 4 beschriebene Brennstoffmengenverteilung des Brennstoffeinspritzventils 1 gezielt variiert werden kann.

Fig. 6 zeigt ein Ausführungsbeispiel für ein außenöffnendes Brennstoffeinspritzventil 1. Der Ventilschließkörper 8 ist in Abspritzrichtung sich verbreiternd ausgebildet. Die Ventilsitzfläche 7 weist einen Teilbereich 30a auf, in dem eine Erhöhung 42 an der Ventilsitzfläche 7 des Ventilsitzkörpers 6 ausgebildet ist. Das Brennstoffeinspritzventil weist eine Abspritzöffnung 10 auf, die sich in einen ersten Abspritzbereich 43 und einen zweiten Abspritzbereich 44 aufteilt. Dabei ist durch den Teilbereich 30a der erste Abspritzbereich 43 unterschiedlich zu dem zweiten Abspritzbereich 44 gedrosselt. Der Ventilschließkörper 8 ist zur Ausbildung des Zwischenraumes 31 stumpfer als die Ventilsitzfläche 7 ausgebildet, so daß sich der Zwischenraum 31 in Strömungsrichtung radial verbreitert. Der Ventilschließkörper 8 liegt an einer Dichtstelle 32 an der Ventilsitzfläche 7 an, die bezüglich der Strömungsrichtung 33 stromabwärts der Teilbereiche 30a und 30b ausgebildet ist und im wesentlichen in einer senkrecht zu der Ventilachse 34 orientierten Ebene liegt.

Bei einem Ventilnadelhub der Ventilnadel 9 ist der Brennstoffstrom im zweiten Abspritzbereich 44 zunächst größer als der Brennstoffstrom im ersten Abspritzbereich 43. Mit zunehmender Vergrößerung des Ventilnadelhubs der Ventilnadel 9 verringert sich der Einfluß des Teilbereichs 30a auf die Drosselung des im ersten Abspritzbereich 43 abgespritzten Brennstoffstrahls. Dadurch gleicht sich der Brennstoffstrom im ersten Abspritzbereich 43 zunehmend dem Brennstoffstrom im zweiten Abspritzbereich 44 an. Durch den Ventilnadelhub der Ventilnadel 9 läßt sich daher die Brennstoffmengenverteilung des von dem Brennstoffeinspritzventil 1 abgespritzten Brennstoffs steuern.

Fig. 7 zeigt ein weiteres Ausführungsbeispiel für ein außenöffnendes Brennstoffeinspritzventil 1. Bei diesem Ausführungsbeispiel weist der Ventilschließkörper 8 einen Teilbereich 30a auf, in dem eine Erhöhung 42 an dem Ventilschließkörper 8 ausgebildet ist. Dadurch wird, ähnlich wie in der Fig. 6 beschrieben, in den Abspritzbereichen 43, 44 der Brennstoffstrom eines von dem Brennstoffeinspritzventil 1 abgespritzen Brennstoffs unterschiedlich gedrosselt.

Fig. 8 zeigt ein Anwendungsbeispiel bei dem das erfindungsgemäße Brennstoffeinspritzventil 1 zum direkten Einspritzen von Brennstoff, insbesondere von Benzin, in den Brennraum 50 einer Brennkraftmaschine 51 verwendet wird. In dem Anwendungsbeispiel weist das Brennstoffeinspritzventil 1 sechs umfänglich versetzt angeordnete Abspritzöffnungen auf. Außerdem weisen die Ventilsitzfläche und/oder der Ventilschließkörper erfindungsgemäß umfänglich versetzt angeordnete Teilbereiche auf, die den Brennstoffstrom abhängig von einem Ventilnadelhub der Ventilnadel unterschiedlich drosseln. Das Brennstoffeinspritzventil 1 ist mit dem Zylinder 52 der Brennkraftmaschine 51 verbunden, wobei in dem Zylinder 52 ein Kolben 53 bewegbar geführt ist. In einem Zylinderkopf 54 ist eine Zündkerze 55 befestigt. Beim Betätigen des Brennstoffeinspritzventils 1 treten durch die Abspritzöffnungen Brennstoffstrahlen 56a bis 56f aus. Dabei sind die Brennstoffströme der Brennstoffstrahlen 56a bis 56c und der Brennstoffstrahlen 56d bis 56f jeweils zumindest annähernd gleich gedrosselt, wobei die Brennstoffströme der Brennstoffstrahlen 56a bis 56c unterschiedlich zu den Brennstoffströmen der Brennstoffstrahlen 56d bis 56f gedrosselt sind. Die Drosselung ist dabei so ausgeführt, daß bei einem ersten Ventilnadelhub des Brennstoffeinspritzventils 1 die Brennstoffstrahlen 56d bis 56f stärker als die Brennstoffstrahlen 56a bis 56c gedrosselt sind, so daß die Einspritzung von Brennstoff in den Brennraum 50 im wesentlichen im Bereich der Zündkerze 55 erfolgt. Bei einem zweiten größeren Ventilnadelhub des Brennstoffeinspritzventils 1 sind die Brennstoffströme der Brennstoffstrahlen 56a bis 56f annähernd gleich, so daß der Brennstoff gleichmäßig im Brennraum 50 der Brennkraftmaschine 51 verteilt wird. Dadurch kann auch im sehr mageren Betrieb der Brennkraftmaschine 51 eine wirkungsvolle Zündung des eingespritzten Brennstoffs erreicht werden. Mit der variablen Brennstoffmengenverteilung kann somit besser auf die verschiedenen Anforderungen der Brennkraftmaschine 51, wie zum Beispiel Homogenbetrieb/Schichtbetrieb, Kaltstart, Vollast/Teillast reagiert werden.

Die in den verschiedenen Ausführungsbeispielen beschriebenen unterschiedlich erhöhten Teilbereiche 30a, 30b werden z. B. mittels Prägen ausgeformt.

Die Erfindung ist nicht auf die beschriebenen Ausführungsbeispiele beschränkt. Insbesondere ist in den Ausführungsbeispielen nur das Prinzip der variablen Drosselung des Brennstoffstroms beschrieben. Die Erfindung eignet sich daher für eine beliebige Anzahl von Abspritzöffnungen 10, 11 und eine beliebige Gestaltung derer. Außerdem kann die unterschiedliche Drosselung auch über geeignete Aussparungen am Ventilschließkörper 8 oder dem Ventilsitzkörper 6 erfolgen.

## Patentansprüche

1. Brennstoffeinspritzventil (I), insbesondere Einspritzventil für Brennstoffeinspritzanlagen von Brennkraftmaschinen (51), mit einem mittels einer Ventilnadel (9) betätigbaren Ventilschließkörper (8), der mit einer Ventilsitzfläche (7) zu einem Dichtsitz zusammenwirkt, und zumindest einer von dem Dichtsitz abgedichteten Abspritzöffnung (10, 11),
**dadurch gekennzeichnet,**
**dass** ein piezoelektrischer oder magnetostriktiver Aktor (14) der Betätigung des Ventilschließkörpers (8) dient und die Ventilsitzfläche (7) umfänglich versetzt angeordnete Teilbereiche (30a, 30b) aufweist, die einen Brennstoffstrom abhängig von einem Ventilnadelhub der Ventilnadel (9) unterschiedlich drosseln, wobei zumindest ein Teilbereich (30a) an der Ventilsitzfläche (7) als Erhöhung (35, 42) ausgebildet ist.

2. Brennstoffeinspritzventil nach Anspruch 1,
**dadurch gekennzeichnet,**
**daß** wenigstens ein Teilbereich (30a) unmittelbar an der Abspritzöffnung (11) vorgesehen ist.

3. Brennstoffeinspritzventil nach Anspruch 1 oder 2,
**dadurch gekennzeichnet,**
**daß** die Abspritzöffnung (10) zumindest zwei Abspritzbereiche (43, 44) aufweist, in denen der Brennstoffstrom unterschiedlich gedrosselt ist.

4. Brennstoffeinspritzventil nach Anspruch 1 oder 2,

5. Brennstoffeinspritzventil nach einem der Ansprüche 1 bis 4,
**dadurch gekennzeichnet,**
**daß** der Ventilschließkörper (8) zur Ausbildung eines Zwischenraumes (31) stumpfer als die Ventilsitzfläche (7) zuläuft, so daß sich der Zwischenraum (31) in Strömungsrichtung (33) radial verbreitert.

6. Brennstoffeinspritzventil nach einem der Ansprüche 1 bis 5,
**dadurch gekennzeichnet,**
**daß** bei geschlossenem Brennstoffeinspritzventil (1) der Ventilschließkörper (8) an einer Dichtstelle (32) an der ventilsitzfläche (7) anliegt, die bezüglich der Strömungsrichtung (33) entweder nach oder vor den drosselnden Teilbereichen (30a, 30b) ausgebildet ist.

7. Brennstoffeinspritzventil nach Anspruch 6,
**dadurch gekennzeichnet,**
**daß** die Dichtstelle (32) im wesentlichen in einer senkrecht zu einer Ventilachse (34) orientierten Ebene liegt.

## Claims

1. Fuel injection valve (1), in particular injection valve for fuel injection systems of internal combustion engines (51), having a valve closing body (8) which can be actuated by means of a valve needle (9) and interacts with a valve seat face (7) to form a sealing seat, and having at least one ejection opening (10, 11) which is sealed off by the sealing seat, **characterized in that** a piezoelectric or magnetostrictive actuator (14) serves to actuate the valve closing body (8) and the valve seat face (7) has partial regions (30a, 30b) which are arranged offset around the circumference and restrict a fuel flow to a different extent as a function of a valve-needle stroke of the valve needle (9), at least one partial region (30a) being formed on the valve seat face (7) as an elevation (35, 42).

2. Fuel injection valve according to Claim 1, **characterized in that** at least one partial region (30a) is provided directly at the ejection opening (11).

3. Fuel injection valve according to Claim 1 or 2, **characterized in that** the ejection opening (10) has at least two ejection regions (43, 44) in which the fuel flow is restricted to a different extent.

4. Fuel injection valve according to Claim 1 or 2, **characterized in that** the fuel injection valve (1) has a plurality of ejection openings (10, 11), the fuel flow being restricted to a different extent at at least two ejection openings (10, 11).

5. Fuel injection valve according to one of Claims 1 to 4, **characterized in that** the valve closing body (8) tapers more obtusely than the valve seat face (7) in order to form an intermediate space (31), with the result that the intermediate space (31) is widened radially in the direction of flow (33).

6. Fuel injection valve according to one of Claims 1 to 5, **characterized in that**, when the fuel injection valve (1) is closed, the valve closing body (8) rests on a sealing location (32) on the valve seat face (7) which is formed either in front of or behind the restricting partial regions (30a, 30b) with regard to the direction of flow (33).

7. Fuel injection valve according to Claim 6, **characterized in that** the sealing location (32) lies substantially in a plane which is oriented perpendicularly with respect to a valve axis (34).

## Revendications

1. Injecteur de carburant (1), notamment injecteur pour des installations d'injection de carburant de moteurs à combustion interne (51), comportant un organe d'obturation de soupape (8) actionné par une aiguille d'injecteur (9) et coopérant avec une surface formant siège de soupape (7) pour former un siège d'étanchéité ainsi qu'au moins un orifice d'éjection (10, 11) fermé de manière étanche par le siège d'étanchéité,
**caractérisé par**
un actionneur piézo-électrique ou magnétostrictif (14) pour actionner l'organe d'obturation de soupape (8) et
la surface formant siège de soupape (7) comporte des zones partielles (30a, 30b) décalées à la périphérie qui assurent un étranglement différent de la veine de carburant en fonction de la course de l'aiguille d'injecteur (9), et au moins une zone partielle (30a) est réalisée comme bossage (35, 42) sur la surface formant siège de soupape (7).

2. Injecteur de carburant selon la revendication 1,
**caractérisé en ce qu'**
au moins une zone partielle (30a) est prévue directement au niveau de l'orifice d'éjection (11).

3. Injecteur de carburant selon la revendication 1 ou 2,
**caractérisé en ce que**
l'orifice d'éjection (10) comporte au moins deux zones d'éjection (43, 44) qui étranglent différemment la veine de carburant.

4. Injecteur de carburant selon les revendications 1 ou 2,
**caractérisé en ce que**
l'injecteur (1) comporte plusieurs orifices d'éjection (10, 11) et la veine de carburant est étranglée différemment par au moins deux orifices d'éjection (10, 11).

5. Injecteur de carburant selon l'une des revendications 1 à 4,
**caractérisé en ce que**
l'organe d'obturation de soupape (8) est plus évasé que la surface formant siège de soupape (7) pour former un espace intermédiaire (31) afin que cet espace intermédiaire (31) s'élargisse radialement dans la direction d'écoulement (33).

6. Injecteur de carburant selon l'une des revendications 1 à 5,
**caractérisé en ce que**
l'organe d'obturation de soupape (8) s'applique contre un point d'étanchéité (32) de la surface de siège d'étanchéité (7) lorsque l'injecteur (1) est fermé, cette surface d'étanchéité étant réalisée soit en amont soit en aval des zones partielles d'étranglement (30a, 30b) par rapport à la direction d'écoulement (33).

7. Injecteur de carburant selon la revendication 6,
**caractérisé en ce que**
le point d'étanchéité (32) se situe essentiellement dans un plan orienté perpendiculairement à l'axe (34) de l'injecteur.
